# EUROPÄISCHE PATENTANMELDUNG

(11) **EP 3 053 952 A1**
(43) Veröffentlichungstag der Anmeldung: **10.08.2016**
(21) Anmeldenummer: 15153869.1
(22) Anmeldetag: 04.02.2015
(51) Int. Cl.: C08J 9/28, C01B 33/16, C01B 33/158, B01J 13/00

(54) **Verfahren zur Herstellung eines Aerogelmaterials**

(71) Anmelder: Eidgenössische Materialprüfungs- und Forschungsanstalt EMPA, 8600 Dübendorf (CH)
(72) Erfinder: Die Erfindernennung liegt noch nicht vor
(74) Vertreter: Schmauder & Partner AG Patent- & Markenanwälte VSP

(57) **Zusammenfassung**

Ein Verfahren zur Herstellung eines Aerogelmaterials mit einer Porosität von mindestens 0,55 und einer mittleren Porengrösse von 10 nm bis 500 nm, umfassend folgende Schritte:
a) Präparation und gegebenenfalls Aktivierung eines Sols;
b) Einfüllen des Sols in eine Gussform (10);
c) Gelierung des Sols, wobei ein Gel (4) entsteht, und anschliessende Alterung des Gels;
d) gegebenenfalls Austausch von Porenflüssigkeit durch ein Lösemittel;
e) gegebenenfalls chemische Modifizierung des gealterten und gegebenenfalls lösemittelgetauschten Gels (6) durch ein Reaktionsmittel;
f) Trocknung des Gels, wobei das Aerogelmaterial gebildet wird.

Die im Schritt b) verwendete Gussform ist mit einer Vielzahl von kanalbildenden Elementen (2; 14) versehen, welche derart gestaltet sind, dass das in die Gussform eingefüllte Sol über eine vorgegebene, in Kanalrichtung der Elemente definierte Mindestlänge L überall maximal um einen Abstand X von einem kanalbildenden Element entfernt ist, mit der Massgabe, dass X = 15 mm und L/X > 3.

## Beschreibung

### Technisches Gebiet

Die Erfindung betrifft ein Verfahren zur vereinfachten Herstellung eines Aerogelmaterials gemäss Oberbegriff des Anspruchs 1, je ein Vorstufenprodukt gemäss Oberbegriff des Anspruchs 13 beziehungsweise 14, sowie eine Dämmstoffplatte gemäss Oberbegriff des Anspruchs 15.

### Stand der Technik

Aerogele finden vermehrt Anwendungen in hochspezialisierten Nischenmärkten wie beispielsweise in der Gebäudetechnik als hochdämmende Isolationsmaterialien oder in der Luft- und Schifffahrtsindustrie sowie in High-Tech Anwendungen. Aerogele gibt es in diversen Ausführungsformen und Materialien. Die Industrialisierung von Aerogelen und Xerogelen erlebt seit der Jahrtausendwende einen bedeutenden Aufschwung. Heute sind insbesondere Aerogele auf Silikat-Basis (SiO₂) erhältlich. Zu den bekanntesten Formen gehören Granulat und monolithische Platten. Zudem sind auch Aerogel auf Basis von zumindest teilweise quervernetzten Polymeren wohl bekannt, wie etwa die harzbasierten Resorcinol-Formalhedyd [Pekala et. al, J. Mater. Sci, 1989, 24, 3221-3227] und verwandten Systeme, welche bis heute keine industrielle Bedeutung erlangt haben. Die industrielle Prozessskalierung von alternativen Polymer basierten Aerogelen, insbesondere poly-Isocyanat basierten Aerogelen wie PU und PUR, ist derzeit in vollem Gange, wobei in den kommenden Jahren diverse neue Markteinführungen zu erwarten sind. In Zukunft werden wohl Silikat- als auch polymerbasierte Aerogele sowie aus letzteren durch Pyrolyse erhaltene Kohlenstoff-Aerogele in der Gebäude- und Energietechnik sowie auch in den Bereichen Mobilität und High-Tech Anwendungen zunehmend an Bedeutung gewinnen.

Ein kritischer Schritt bei der Herstellung von Aerogelmaterialien ist das Trocknen eines nassen Gels. Hierfür verwendete man früher für silikatbasierte Gele ausschliesslich die superkritische Trocknung, d.h. die Trocknung aus einem superkritischen Fluid (typischerweise niedere Alkohole oder später auch CO₂). Im Fall der Silikat-Aerogele lassen sich durch Lösemittel-Trocknung (unterkritische Trocknung) von hydrophobierten Gelen Materialien mit quasi identischen Eigenschaften wie die superkritisch getrockneten Aerogele herstellen. Diese wurden in den Anfängen gemäss klassischer Definition Xerogele genannt, ein Begriff der auch heute noch für aus Lösemitteln getrocknete Aerogele verwendet wird. In der Folge wird jedoch die auf Materialeigenschaften (Dichte < 0.15 g/cm³, Porosität >85%, Porengrösse 20 bis 80 nm) basierte Definition auch für unterkritisch getrocknete Materialien verwendet, welche somit ebenfalls als Aerogele bezeichnet werden. Die Entwicklung von Lösemitteltrocknungsverfahren für organische Gele (z.B. Polyurethan und Polyurea) ist zurzeit in vollem Gange.

Hauptkostenpunkte der heute noch vergleichsweise teuren Aerogele sind sowohl die aufwändige Prozessführung, Lösemittel, Lösemittelverluste und damit verbundene VOC Abgaben sowie Rohstoffe und Hydrophobierungsmittel. Die Entwicklung der Produktionsprozesse zielt auf Einsparungen bei allen erwähnten Punkten ab, wobei bis dato folgende Entwicklungsgeschichte durchlaufen wurde. Zunehmend an Bedeutung gewinnt heute die vereinfachte Trocknung bei Normaldruck aus lösemittelhaltigen Gelen, welche für SiO₂ Aerogele erstmals durch Anderson, Scherer und deren Mitarbeiter [J. Non. Cryst. Solids, 1995, 186, 104-112] beschrieben wurde. Das Verfahren wurde rasch bekannt und beflügelte neue Herstellungsprozesse für Silikat-Aerogele. Das Patent US 5,565,142 beschreibt ein solches Verfahren zur Herstellung. Die Lösemittelaustauschzeiten und Hydrophobierungszeiten betragen insgesamt um die 120 Stunden, wobei die Dimension bzw. die Form des Gelkörpers nicht weiter beschrieben ist.

Die WO 1998/005591 A1 betrifft ein Herstellungsverfahren für organisch modifizierte, permanent hydrophobe Aerogele. Gleich wie im Fall der WO 1995/006617 A1 wird das SiO₂-Gel ausgehend von einer Wasserglaslösung mittels Neutralisation durch Säure oder nach der Bildung eines Kieselsols durch Ionentausch und anschliessender Basenzugabe gebildet. Der pH Wert während der Gelierung ist typischerweise im Bereich zwischen 4 und 8. Das nasse Gel wird in einem organischen Lösemittel gewaschen, bis der Wassergehalt unter 5% liegt und anschliessend hydrophobiert. Trocknung unter Normaldruck durch Verdampfen des Lösemittels lässt das Aerogelmaterial als Granulat zurück. Die Dimension bzw. die Form der Gelkörper sind auch in dieser Veröffentlichung nicht weiter beschrieben. Ebenfalls nicht weiter beschrieben sind die Wasch- und Hydrophobierungszeiten wobei das Mahlen des erstarrten Gels namentlich erwähnt ist.

Als Beispiele von organischen Aerogels beschreiben US 5,484,818 A und US 2006/0211840 A1 die Herstellung von Polyisocyanat basierten Aerogelen. Isocyanat-Vorläuferverbindungen werden in einem organischen Lösemittelgemisch gelöst und mit Polyolen, Polyaminen oder Wasser reagiert, geliert und nach erfolgtem Lösemittelaustausch nach CO₂ superkritisch getrocknet. Die beiden erwähnten Patentschriften sind insofern typisch für die Mehrzahl der technischen Dokumente zu Polymer Aerogelen, als dass sie die Chemie nicht aber verarbeitungsspezifische Prozessschritte beschrieben: Über die Arte der Gelkörper und deren Form oder genaue Topologie ist im allgemeinen wenig dokumentiert. US 5,962,539 A beschreibt ein Verfahren zur überkritischem Trocknung von organischen Gelen. Auch hier sind keine Angaben zur Gelform oder Gestalt zu finden.

Es ist bekannt, dass Lösemittelaustauschprozesse in nanoporösen Systemen diffusionslimitiert sind, was in manchen Situationen zu unerwünscht langen Austauschzeiten führt. Als einfache Massnahme können Diffusionsprozesse durch Temperaturerhöhung beschleunigt werden. Dies wird heute in der Aerogelherstellung bereits ausgenutzt, indem man Austauschprozesse in organischen Lösemitteln oft möglichst nahe an deren Siedepunkt durchführt.

Alternativ werden Aerogele entweder als Granulat oder dünne Matten oder Platten mit einer kürzesten Dimension beziehungsweise Dicke von weniger als 2 cm hergestellt und danach in einem oder mehreren Veredelungsschritten verklebt. Somit lassen sich dickere Dämmplatten oder andere, teils auch funktionelle Kompositmaterialien herstellen. Die US 2014/0004290 A1 und US 2014/0287641 A1 beschreiben solche Herstellverfahren von Kompositmaterialien ausgehend von Aerogel als Grundstoff durch Klebetechnik, wobei das Hauptaugenmerk auf verbesserte mechanische Eigenschaften und Verarbeitbarkeit gelegt wurde. Die WO 2012/062370 A1 beschreibt ein ähnliches Verfahren, wobei als Klebstoffkomponente ein Resorcinol-Formalhedyd Harzsystem in Xerogelform verwendet wird.

Bei der technischen Herstellung von Aerogelgranulat wird die Dimensionalität des Gels durch Zerstückelung vor dem Lösemittelaustausch durch mechanische Prozesse oder durch Gelierung in Tropfenform im Fallturm bewirkt. Ersteres Verfahren hat sich industriell durchgesetzt, da sich auf diese Weise eine deutlich bessere Platzausnutzung in der Anlage erreichen lässt. Als Stand der Technik gilt die Gelierung eines Gelteppichs auf einem laufenden Band und Zerstückelung der gealterten Gelteppichs über einem Brecher. Die dort auftretenden Scherkräfte haben jedoch zur Folge dass nebst den gewünschten Granulatteilchen im Grössenbereich von 1 bis 5 mm auch eine beachtliche Menge des Gels als Feinanteil < 1 mm übrig bleibt. Dieser Feinanteil kann bis zu 30% der Gesamtausbeute betragen und fällt in der Produktion als minderwertiges Produkt an.

### Darstellung der Erfindung

Aufgabe der Erfindung ist es, ein verbessertes Verfahren zur Herstellung von Aerogelmaterialien anzugeben. Weitere Aufgaben bestehen darin, Vorstufenprodukte zur Herstellung einer Dämmstoffplatte sowie eine neue Dämmstoffplatte bereit zu stellen.

Diese Aufgaben werden erfindungsgemäss gelöst durch das Herstellungsverfahren nach Anspruch 1 sowie durch die Vorstufenprodukte nach Anspruch 13 beziehungsweise 14 sowie durch das Kompositmaterial nach Anspruch 15. Vorteilhafte Ausführungsformen sind in den abhängigen Ansprüchen definiert. Das erfindungsgemässe Verfahren zur Herstellung eines Aerogelmaterials mit einer Porosität von mindestens 0.55 und einer mittleren Porengrösse von 10 nm bis 500 nm umfasst folgende Schritte:
a) Präparation und gegebenenfalls Aktivierung eines Sols;
b) Einfüllen des Sols in eine Gussform;
c) Gelierung des Sols, wobei ein Gel entsteht, und anschliessende Alterung des Gels;
d) gegebenenfalls Austausch von Porenflüssigkeit durch ein Lösemittel;
e) gegebenenfalls chemische Modifizierung des gealterten und gegebenenfalls lösemittelgetauschten Gels durch ein Reaktionsmittel;
f) Trocknung des Gels, wobei das Aerogelmaterial gebildet wird.

Erfindungsgemäss ist die im Schritt b) verwendete Gussform mit einer Vielzahl von kanalbildenden Elementen versehen, welche derart gestaltet sind, dass das in die Gussform eingefüllte Sol über eine vorgegebene, in Kanalrichtung der Elemente definierte Mindestlänge L überall maximal um einen Abstand X von einem kanalbildenden Element entfernt ist, mit der Massgabe, dass X = 15 mm und L/X > 3.

Das in die Gussform eingefüllte Sol ist - über eine vorgegebene, in Kanalrichtung der Elemente definierte Mindestlänge L - überall maximal um einen Abstand X von einem kanalbildenden Element entfernt ist. Bei Betrachtung eines Querschnitts senkrecht zur Kanalrichtung bedeutet dies, dass keine Stelle im Sol weiter als X vom nächstliegenden kanalbildenden Element entfernt ist. Damit wird gewährleistet, dass auch die innersten Regionen im Sol nicht allzu weit, nämlich höchstens um einen Maximalabstand X, vom der durch das kanalbildende Element definierten Grenzfläche entfernt ist. Dadurch, dass X höchstens 15 mm beträgt, ist jede Stelle im Gel für ein durch die besagte Grenzfläche zugeführtes Lösemittel oder Reaktionsmittel effizient zugänglich. Allerdings darf diese vorteilhafte geometrische Situation nicht lediglich an einzelnen Einschnürungen in Kanalrichtung gegeben sein, sondern muss über eine Strecke L ausgebildet sein, die mindestens das 3-fache des Maximalabstandes X beträgt.

Es ist zu beachten, dass die Bezeichnung "Maximalabstand" nicht als absolut maximaler Abstand missverstanden werden darf. Vielmehr handelt es sich um den maximalen aller kürzesten Abstände.

Es versteht sich, dass der Maximalabstand X von der Form und in gewissen Fällen auch von der gegenseitigen Beabstandung der kanalbildenden Elemente abhängt. Die entsprechenden Relationen ergeben sich aus an sich bekannten Beziehungen der planaren Geometrie. Bei komplizierten und/oder unregelmässigen Formen ist der Maximalabstand erforderlichenfalls numerisch zu bestimmen.

Die Bildung eines Aerogels ausgehend von einem Sol ist grundsätzlich bekannt und beinhaltet insbesondere einen Schritte des Lösemittelaustausches und/oder einen Schritt der chemischen Modifizierung. Durch die erfindungsgemässe Anordnung wird eine wesentlich bessere Zugänglichkeit des Gels für zugeführtes Lösemittel und/oder Reaktionsmittel gewährleistet. Dadurch ergibt sich eine Verkürzung der Prozessdauer und damit einhergehend eine Verbesserung der Prozessökonomie. Diese Vorteile ergeben sich nicht nur für bereits bekannte Aerogel-Herstellverfahren, sondern auch für spätere, noch zu entwickelnde Verfahren, sofern diese ebenfalls auf der Zuführung einer flüssigen oder allenfalls gasförmigen Spezies in das Gel beruhen.

Durch gezielte Wahl der Geometrie d.h. durch Einschränkung der Dimension in mindestens einer Raumrichtung die diffusionslimitierten Lösemittelaustauschprozesse stark beschleunigen. In dieser Art kann man beispielsweise grossflächige, monolithische Gelplatten mit einer Dicke von einigen Millimetern innert aus Sicht eines industriellen Fertigungsprozesses vernünftiger Zeit vom einen in ein anderes Lösemittelgemisch tauschen: Eine silikatbasierte Gelplatte von 50 nm mittlerer Porengrösse und 5 mm Dicke lässt sich in einem Alkohol-basierten Lösemittelgemisch bei Raumtemperatur innert weniger Stunden komplett (d.h. bis in die Tiefe der Platte) austauschen. Die Diffusionsgeschwindigkeit ist durch die Lösung des 2. Fick'schen Gesetzes gegeben: Im Falle einer Gelplatte geht der für den Lösemittelautausch (Konzentrationen aller Lösemittelkomponenten im Gleichgewicht) benötigte Zeitbedarf in erster Näherung mit dem Quadrat der Plattendicke das heisst der kürzesten Dimension einher. Dies bedeutet, dass eine Verdoppelung der Plattendicke eine Vervierfachung der Austauschzeit zur Folge hat. Dies hat tiefgreifende Folgen auf industrielle Fertigungsprozesse von Aerogel- und Xerogelmaterialien: Je nach System sind in der Praxis sind Aerogelplatten von 2 bis 3 cm noch mit vertretbarem Zeitaufwand herstellbar. Eine beispielsweise in der Dämmtechnik wünschenswerte Plattendicke von 10 cm ist als Vollmaterial gemäss heutiger Technik auf wirtschaftliche Art und Weise nicht herstellbar.

Das erfindungsgemässe Verfahren erlaubt eine im Vergleich zu den bisher bekannten Verfahren wesentlich einfachere und schnellere Herstellung von Aerogelmaterialien durch kontrollierte Strukturierung des Gelkörpers.

Grundsätzlich kommen für die Fertigung der Gussform verschiedene Materialien in Frage. Für das Aussengehäuse wie auch für etwaig verwendete Rohrelemente sind beispielsweise Polyolefine, insbesondere Polypropylen oder Polyethylen geeignet. Stangenelemente werden vorteilhafterweise aus Metall, beispielsweise aus nichtrostendem Stahl hergestellt.

Gemäss einer Ausgestaltung (Anspruch 2) sind die kanalbildenden Elemente als Bündel parallel zueinander angeordneter Rohre ausgestaltet, wobei die Gussform für das Sol durch die Innenräume der Rohre gebildet wird, und wobei der Lösemittelaustausch d) und/oder die chemische Modifizierung des Gels e) durch einen infolge Schrumpfung während der Alterung des Gels c) ausgebildeten Zwischenraum zwischen Gel und kanalbildendem Element direkt in der Gussform, vorzugsweise durch erzwungene Konvektion von zugeführtem Lösemittel beziehungsweise Reaktionsmittel ausgeführt wird. Es versteht sich, dass bei dieser Art von Anordnung der Maximalabstand X durch Betrachtung der Entfernung eines im Rohrinneren liegenden Punktes von der Innenfläche des betreffenden Rohrelementes zu bestimmen ist.

Prinzipiell können verschiedene Formen des Rohrquerschnitts verwendet werden. Vorteilhafterweise handelt es sich um Rohre mit kreisrundem oder viereckigem, insbesondere quadratischem Innenprofil. Weiterhin ist es zur Handhabung von Vorteil, wenn jeweils eine gewisse Anzahl von Rohren zu einem Rohrbündel zusammengehalten ist.

Bei einer vorteilhaften Ausgestaltung (Anspruch 3) haben sämtliche Rohre einen identischen Querschnitt, welcher vorzugsweise sechseckförmig ist. Damit lassen sich kompakte Rohrbündel mit wenig Totvolumen zwischen den einzelnen Rohren bauen.

Bei einer weiteren Ausführungsform (Anspruch 4) wird das gegebenenfalls lösemittelgetauschte und gegebenenfalls chemisch modifizierte Gel in Form von Gelstangen aus der Gussform entfernt und danach die Trocknung f) mittels unterkritischer Trocknung ausgeführt wird. Bei diesem Vorgang zerfallen die einzelnen Gelstangen in kleinere Bruchstücke, wobei in vorteilhafter Weise ein Aerogel- bzw. Xerogelgranulat mit minimalem Feinanteil entsteht.

Gemäss einer weiteren Ausführungsform (Anspruch 5) sind die kanalbildenden Elemente als Bündel parallel zueinander angeordneter Stangenelemente ausgestaltet, wobei die Gussform für das Sol durch einen sich zwischen den Stangenelementen befindlichen Raum gebildet wird, und wobei die Stangenelemente nach erfolgter Gelierung und Alterung in Kanalrichtung aus der Gussform herausziehbar sind derart, dass ein plattenförmiger Gelkörper mit durchgehenden Kanälen entsteht. Der Lösemittelaustausch d) und/oder die chemische Modifizierung des Gels e) wird durch Beaufschlagen mit Lösemittel beziehungsweise Reaktionsmittel ausgeführt wird. Es versteht sich, dass bei dieser Art von Anordnung die Stangenelemente als Platzhalter für nachträglich im gealtereten Gel gebildete Kanäle wirken. Dementsprechend ist der Maximalabstand X durch Betrachtung der Entfernung eines zwischen den Stangenelementen liegenden Punktes von der Aussenfläche des nächstliegenden Stangenelementes zu bestimmen.

Bei einer Ausführungsform wird das Beaufschlagen mit Lösemittel beziehungsweise Reaktionsmittel an einem zuvor gebildeten plattenförmigen Gelkörper nach Herausnahme desselben aus der Gussform ausgeführt.

Vorteilhafterweise sind die Stangenelemente einendig an einer abnehmbaren Bodenfläche oder Deckelfläche der Gussform befestigt und können dadurch nach erfolgter Alterung des Gels leicht aus dem Gelkörper herausgezogen werden.

Besonders vorteilhafte ist es (Anspruch 6), wenn das Beaufschlagen mit Lösemittel beziehungsweise Reaktionsmittel durch erzwungene Konvektion erfolgt, indem der Gelkörper auf eine mindestens teilweise permeablen Saugplatte gestellt wird, an deren Unterseite ein Unterdruck zum Abziehen des Lösemittels beziehungsweise Reaktionsmittels angelegt wird und wobei von oberhalb des Gelkörpers neues Lösemittel beziehungsweise Reaktionsmittel zugeführt wird. Derartige Verfahren sind grundsätzlich vor allem aus der Papierherstellung bekannt.

Als vorteilhaft hat sich ein Verfahren herausgestellt (Anspruch 7), bei dem
- als Sol ein Siliziumoxid-Sol in einem alkoholischen Lösemittelgemisch präpariert wird, welches mindestens ein säurekatalytisch aktivierbares Hydrophobierungsmittel enthält, wobei der Volumenanteil des Hydrophobierungsmittels im Sol 5 bis 60% beträgt,
- die Gelierung des Sols durch Basenzugabe ausgelöst wird;
- die chemische Modifizierung des gealterten Gels eine Hydrophobierung ist, welche durch Freisetzung oder Zugabe mindestens eines mit dem Hydrophobierungsmittel zusammenwirkenden Hydrophobierungskatalysators eingeleitet wird; und
- die Trocknung des Gels durch durch unterkritisches Trocknen ausgeführt wird.

Die Aktivierung des Hydophobierungsmittels kann in diesem Fall durch Zugabe einer geringen Menge, typischerweise in der Grössenordnung von 10-20% des Gelvolumens, eines in einem kompatiblen Lösemittelgemisch gelösten, sauren Hydrophobierungskatalysators ausgelöst werden. Um eine homogene Hydrophobierung im Gelmaterial zu gewährleisten muss das Hydrophobierungsmittel jedoch ebenfalls in die Tiefe des Gelmaterials eindiffundieren wobei Form und Ausprägung des Gelkörpers den Zeitbedarf des Hydrophobierungsschritts empfindlich beeinflussen. Erfindungsgemäss ist das Eintragen geringer Mengen an Hydrophobierungskatalysator, am Gelvolumen gemessen, durch eine gezielte Strukturierung des Gels nochmals deutlich einfacher und wirtschaftlicher umsetzbar.

Dadurch, dass die Hydrophobierung ein säurekatalysierter Vorgang ist, d.h. durch H⁺ bzw. H₃O⁺ Ionen katalysiert wird, können der unter leicht basischen Bedingungen ablaufende Gelierungsprozess und der unter sauren Bedingungen ablaufende Hydrophobierungsprozess in ein und demselben Organogel zeitlich sauber voneinander getrennt durchgeführt werden. Als weiterer Vorteil zeichnet sich das Verfahren durch einen deutlich reduzierten Lösemittelaufwand aus. Insbesondere gelingt es, die zur Herstellung eines Aerogels verwendete Lösemittelmenge auf maximal das 1.1-fache des Gelvolumens zu beschränken. Aus dem Stand der Technik ist typischerweise mehr als das 2-fache des Gelvolumens an Lösemitteln nötig.

Unter alkoholischem Lösemittelgemisch wird im vorliegenden Zusammenhang ein Gemisch verstanden, das im Wesentlichen aus einem oder gegebenenfalls mehreren niederen Alkoholen (insbesondere Ethanol, Methanol, n-Propanol, Isopropanol, Butanole) und einem geeigneten Anteil an Hydrophobierungsmittel besteht. Es versteht sich, dass das Gemisch zudem einen geringen Anteil an Wasser, unvermeidbare Verunreinigungen und gegebenenfalls - wie anderswo erläutert - gewisse Zusatzstoffe enthalten kann.

Unter einem Hydrophobierungsmittel wird in an sich bekannter Weise eine Komponente verstanden, welche einer Oberfläche hydrophobe d.h. wasserabstossende Eigenschaften verleiht. In dieser Anmeldung bezieht sich das Hydrophobierungsmittel bzw. der Hydrophobierungsprozess primär auf das Silikatgel und die Modifikationen dessen Eigenschaften.

Die vorteilhafte Ausführungsform umfasst das Gelieren eines Alkoxid basierten Silikat-Sols in einem alkoholischen Lösemittelgemisch, das mindestens ein katalytisch aktivierbares Hydrophobierungsmittel enthält.

Der Gelierungsprozess wird durch Zugabe einer verdünnten Base wie etwa Ammoniak ausgelöst. Optional wird das so gebildete Gel, welches auch als "Organogel" bezeichnet werden kann, noch einem Alterungsprozess unterworfen. Das gegebenenfalls gealterte Gel enthält nun alle zur Hydrophobierung und unterkritischen Trocknung gemäss WO 2013/053951 A1 benötigten Komponenten oder genauer gesagt eine Porenflüssigkeit mit den Hauptkomponenten Alkohol und aktivierbares Hydrophobierungsmittel unter Ausnahme des Hydrophobierungskatalysators.

In der Folge gilt es, den Hydrophobierungskatalysator in kontrollierter Weise gänzlich ohne zusätzlichen Lösemitteleintrag oder mit minimalem Lösemitteleintrag in das Gel einzubringen. Gemäss einer bevorzugen Ausführungsform (Anspruch 8) wird als säurekatalytisch aktivierbares Hydrophobierungsmittel Hexamethyldisiloxan (HMDSO) eingesetzt.

Besonders vorteilhaft ist es (Anspruch 9), wenn der Volumenanteil des Hydrophobierungsmittels im Sol 20 bis 50%, insbesondere 25% bis 40% und insbesondere 34% bis 38% beträgt.

Gemäss einer weiteren Ausführungsform (Anspruch 10) wird als Hydrophobierungskatalysator Trimethylchlorsilan (TMCS) und/oder HCl in alkoholischer Lösung oder eine Mischung dieser beiden Komponenten verwendet, welche in einer verdünnten Lösemittelmischung bestehend aus einer ähnlichen oder identischen Zusammensetzung wie der Porenflüssigkeit gelöst ist und in der Flüssigphase mit dem Gel in Kontakt gebracht wird. Die Menge an mit Katalysator beladener Lösung gemessen am Gelvolumen sollte so klein als möglich gehalten werden, um den Vorteil einer möglichst geringen Lösemittelbilanz aufrecht zu erhalten. Vorzugsweise macht die katalysatorhaltige Lösung in einem Batchprozess bzw. kontinuierlichen Prozess einen Volumenanteil bzw. Volumenstromanteil von maximal 30% insbesondere maximal 10% aus. Anstelle von HCl können auch andere Mineralsäuren verwendet werden, wobei sich Salpetersäure (HNO₃) als besonders vorteilhaft erwiesen hat.

Gemäss einer anderen Ausführungsform des Verfahrens (Anspruch 11) ist das Gel ein polymerbasiertes Gel, vorzugsweise ein polyisocyanat-basiertes Gel.

Für gewisse Anwendungen mit erhöhten Anforderungen an die strukturelle Stabilität hat es sich als vorteilhaft erwiesen, das gegebenenfalls aktivierte Sol vor der Gelierung in eine faserbasierte Matrix zuzugegeben. Damit lassen sich faserverstärkte Aerogelplatten herstellen.

Gemäss einem weiteren Aspekt der Erfindung wird ein erstes Vorstufenprodukt zur Herstellung einer Dämmstoffplatte bereitgestellt, welches aus einer mit Langlöchern versehenen erfindungsgemässen Aerogelplatte besteht. Die Langlöcher können als senkrecht durch die Plattenebene verlaufende Durchgangskanäle oder als entsprechende Sacklöcher mit nur einseitiger Öffnung. Die Langlöcher lassen sich insbesondere durch ein oben beschriebenes Verfahren (Anspruch 5) fertigen, wobei die Lochdimension im Wesentlichen durch die Aussenabmessungen der verwendeten Stangenelemente definiert ist. Allerdings ist dabei die Schrumpfung beim Altern des Gels zu berücksichtigen.

Gemäss einem anderen Aspekt der Erfindung wird ein zweites Vorstufenprodukt zur Herstellung einer Dämmstoffplatte bereitgestellt, das aus einer Vielzahl von Aerogelstangen besteht. Diese Stangen lassen sich insbesondere durch ein oben beschriebenes Verfahren (Anspruch 2) herstellen, wobei die Aussenmasse der Aerogelstangen im Wesentlichen durch die Innenabmessungen der verwendeten Rohrelemente definiert ist. Allerdings ist auch hier die Schrumpfung beim Altern des Gels zu berücksichtigen.

Gemäss noch einem weiteren Aspekt der Erfindung wird eine Dämmstoffplatte bereitgestellt, welche eine erstes Vorstufenprodukt in Form einer Aerogelplatte umfasst, in dessen Langlöcher entsprechend geformte Aerogelstangen eines zweiten Vorstufenproduktes eingesetzt bzw. eingepresst sind. Dabei kann für die Aerogelplatte und für die Aerogelstangen grundsätzlich dasselbe Material verwendet. Auf diese Weise lässt sich zunächst das Plattenelement mit den Vorteilen des erfindungsgemässen Verfahrens herstellen. Die in der herzustellenden Dämmstoffplatte letztlich unerwünschten Langlöcher, welche eine erhebliche Minderung der Wärmeisolationsfähigkeit zur Folge hätten, lassen sich durch die eingesetzten Aerogelstangen beheben. Es sind aber auch Anwendungsfälle denkbar, bei denen die eingesetzten Aerogelstangen aus einem anderen Material sind, das insbesondere eine Verbesserung der mechanischen und thermischen Eigenschaften des Enderzeugnisses ermöglicht. Beispielsweise kann eine aus einem silikonbasierten Gel gebildete, mit durchgängigen Langlöchern versehene Aerogelplatte mit Aerogelstangen aus einem Polyurethangel ausgestattet werden.

### Kurzbeschreibung der Zeichnungen

Ausführungsbeispiele der Erfindung werden nachfolgend anhand der Zeichnungen näher beschrieben, dabei zeigen:
- Fig. 1: eine schematische Darstellung von Abstandsrelationen in verschiedenen Anordnungen: (a) quadratisches Rohrprofil, (b) hexagonales Rohrprofil, (c) kreisförmiges Rohrprofil, (d) quadratisches Stabgitternetz, und (e) hexagonales Stabgitternetz;
- Fig. 2: den Ablauf einer ersten Ausführungsform des Verfahrens; und
- Fig. 3: den Ablauf einer zweiten Ausführungsform des Verfahrens.

### Wege zur Ausführung der Erfindung

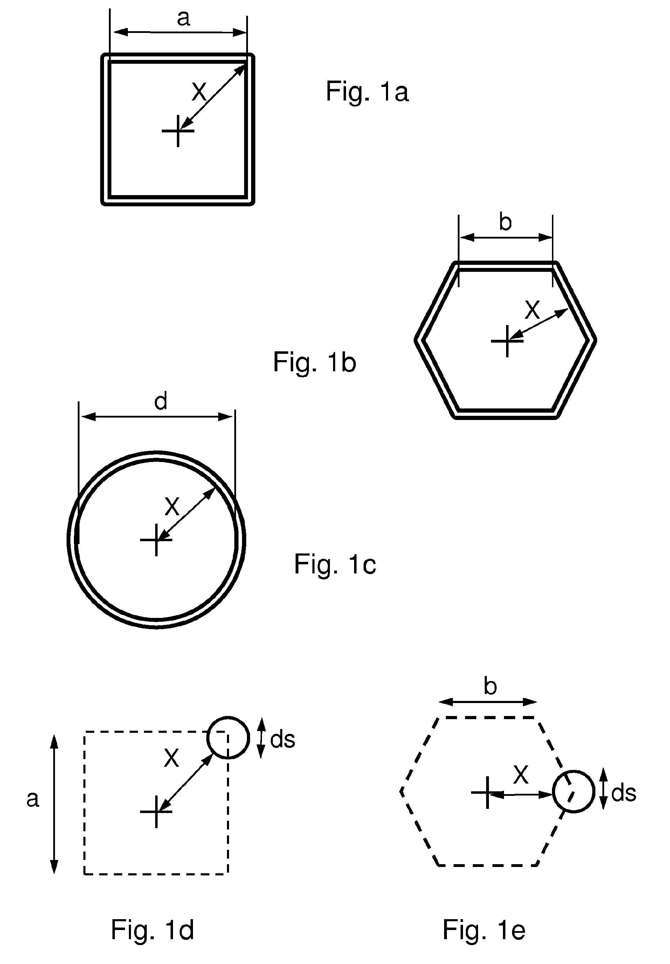

Die Fig. 1 veranschaulicht einige grundlegende geometrische Formen und Relationen. Darin ist der am weitesten vom nächsten kanalbildenden Element entfernte, innerste Punkt mit einem Kreuz dargestellt. Der im oben erläuterten Sinn definierte Maximalabstand X ist ebenfalls eingezeichnet.

Bei dem in der Fig. 1a dargestellten quadratischen Rohrprofil mit der Innenkantenlänge a beträgt der Maximalabstand X = a/2. Dies ist wie bereits eingangs erwähnt der maximale aller kürzesten Abstände von irgendeinem Punkt im Inneren des Profils.

Bei dem in der Fig. 1b dargestellten regulär-hexagonalen Rohrprofil mit der inneren Seitenlänge b beträgt der Maximalabstand X = b/3·√2.

Bei dem in der Fig. 1c dargestellten Kreisrohrprofil mit dem Innendurchmesser d beträgt der Maximalabstand X = d/2.

In den Fig. 1d und 1e sind jeweils schematisch die Zellen eines Gittermusters dargestellt, in der Ecken jeweils kanalbildende Stangen mit Aussendurchmesser ds angeordnet sind.

Bei dem in der Fig. 1d angedeuteten orthonormalen Gitternetz, welches aus lauter quadratischen Zellen der Seitenlänge a besteht, ist der Maximalabstand gegeben durch X = ½ (a√2 - ds).

Bei dem in der Fig. 1e angedeuteten hexagonalen Gitternetz, welches aus lauter regulären hexagonalen Zellen der Seitenlänge d besteht, ist der Maximalabstand gegeben durch X = ½ (b - ds).

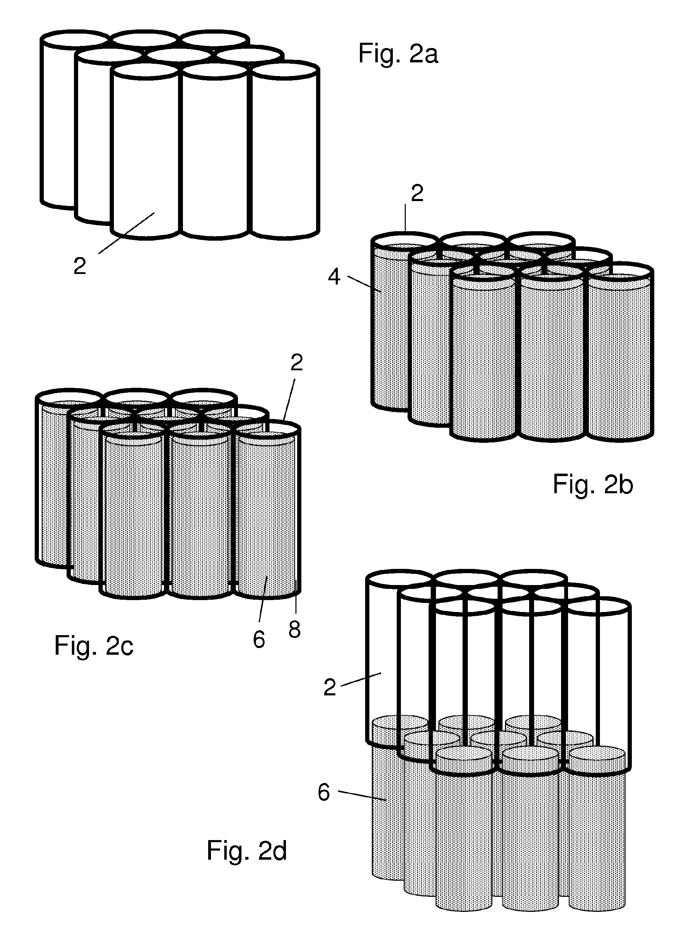

Der in den Fig. 2a bis 2d dargestellte Verfahrensablauf zeigt zunächst in Fig. 2a ein Bündel aus kreiszylindrischen Rohren 2, das anfänglich noch leer ist und insbesondere auf dem Boden einer nicht dargestellten Berandungsschale steht. In der Fig. 2b ist das Rohrbündel gefüllt mit einem Sol oder einem daraus gebildeten, noch ungealterten Gel 4. In der Fig. 2c hat eine Alterung des Gels mit einhergehender Schrumpfung stattgefunden, wodurch zwischen den zylinderförmigen Stangen 6 aus gealtertem Gel und den Rohren 2 ein Luftspalt 8 entstanden ist. In der Fig. 2d sind die Gelstangen 6 mit teilweise nach oben herausgezogenen Rohren 2 gezeigt. Diese stehen nun für die weitere Verarbeitung bereit.

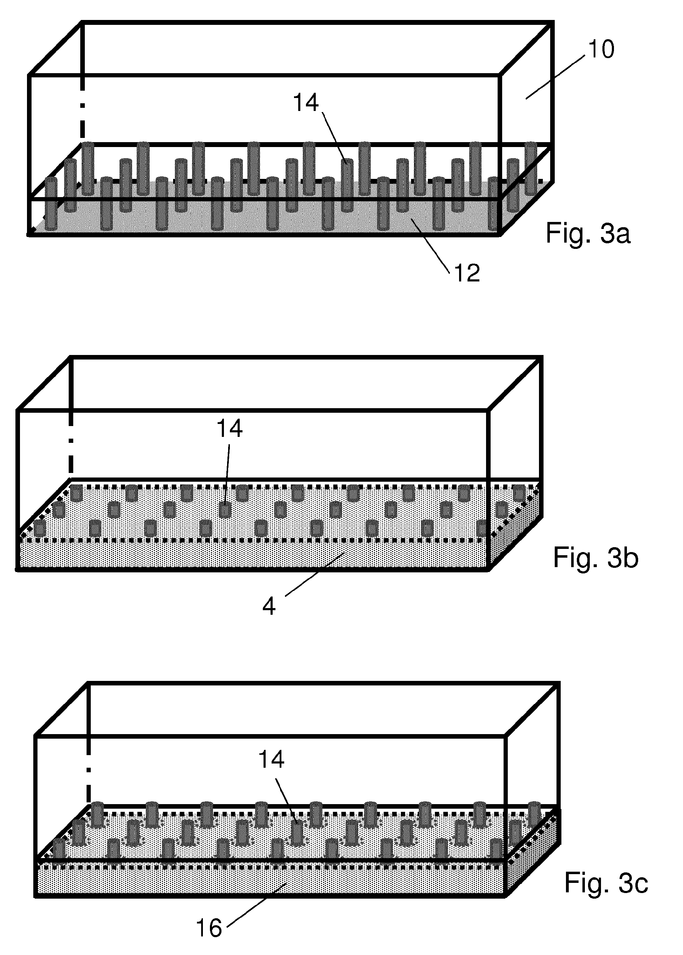

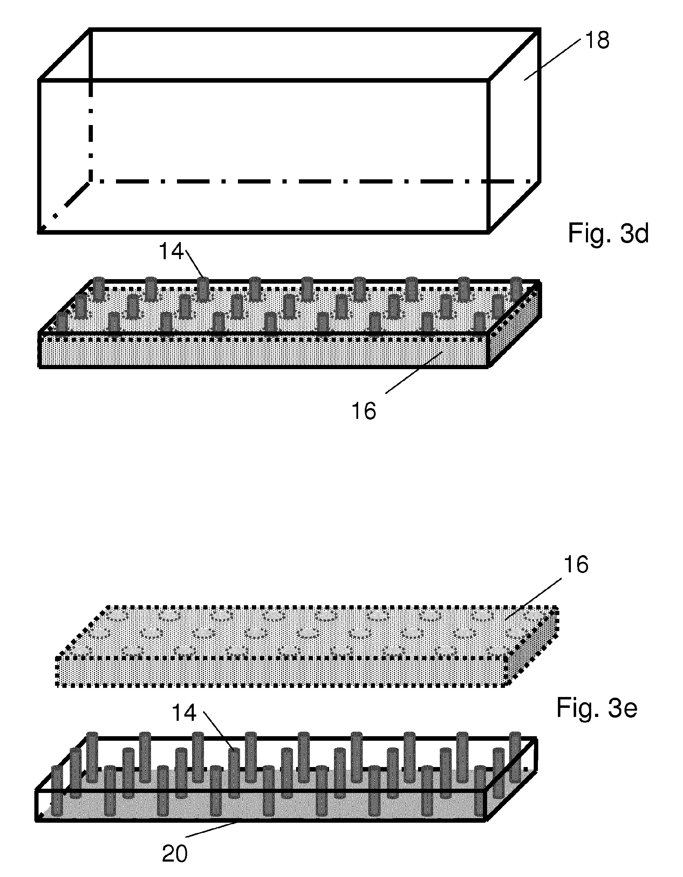

Der in den Fig. 3a bis 3e dargestellte Verfahrensablauf zeigt zunächst in der Fig. 3a eine quaderförmige Berandungsschale 10 mit einer Bodenplatte 12, die nagelbrettartig mit einer Anordnung zylindrischer Stangen 14 versehen ist. Im gezeigten Beispiel sind alle Stangen etwa gleich lang. In der Fig. 3b enthält die Berandungsschale ein eingefüllte Sol beziehungsweise ein daraus gebildetes, noch ungealtertes Gel 4, dessen Füllhöhe knapp unterhalb der Stangenspitzen liegt. In der Fig. 3c hat eine Alterung des Gels mit einhergehender Schrumpfung stattgefunden, wodurch zwischen den zylindrischen Stangen 14 und dem plattenförmigen Körper 16 aus gealtertem Gel jeweils ein Luftspalt 8 entstanden ist. In der Fig. 3d wurde ein Deckelteil 18 der Berandungsschale nach oben gehoben, wodurch ein Bodenteil 20 der Berandungsschale mit dem darin befindlichen gelalterten Gelkörper 16 freigelegt wird. In der Fig. 3e wurde der mit Durchgangslöchern 22 versehene gealterte Gelkörper 16 aus dem mit den Stangen 14 versehenen Bodenteil 20 herausgehoben und steht für die weitere Verarbeitung bereit.

### Herstellung eines anorganisch organischen Hybrid Aerogelgranulats

Ein Siliziumoxid Sol in Alkohol wird durch Zugabe von verdünnter ethanolischer Ammoniaklösung bei Raumtemperatur aktiviert. Das Sol enthält als Nebenkomponente 2% Aminopropyltriethoxysilan (APTES) welches zusammen mit dem Ammoniak zugegeben wird. Dieses Sol wir nun in ein offenes Gefäss eingefüllt, welches mit einem Rohrbündelpaketeinsatz von d = 13 mm Rohrinnendurchmesser, h = 1 mm Wandstärke und L = 90 cm Länge versehen ist. Dieser Einsatz füllt das gesamte Gefässvolumen aus. Nach erfolgter Gelierung wird das Gelpaket während 12 h gealtert. Danach wird der Rohrbündeleinsatz entfernt und überschüssige Flüssigkeit abdekantiert. Danach wird eine verdünnte Lösung, welche einen mit Amingruppen reagierenden Polymerquervernetzer sowie ein Hydrophobierungsmittel enthält, zugegeben. Die Mischung lässt man im Gefäss während weiteren 12 h in das Gel einziehen und reagieren, worauf überschüssige Flüssigkeit erneut entfernt wird. Die so entstandenen Gelstangen werden nun in einen Autoklaven platziert, nach CO₂ ausgetauscht und anschliessend superkritisch getrocknet. Als Produkt bleiben X-Aerogelstangen mit einer Dichte von 0.14 g/cm³ und einer Druckfestigkeit > 10 MPa zurück.

### Hocheffiziente Herstellung eines Silikatbasierten Aerogelgranulats

Ein Siliziumoxid Sol wird in einem kontinuierlichen Prozess hergestellt und mit HMDSO von einem SiO₂ Gehalt von 10% auf 6.6% verdünnt. An einer Füllstation wird dieses Sol bei einer Temperatur von 35°C durch Beimischen von verdünnter Ammoniaklösung aktiviert. An der Abfüllstation stehen 200 I Behälter bereits, welche mit einem den Hohlraum voll ausfüllenden, honigwabenartigen Einsatz versehen sind. Die Honigwabenform hat eine Wandstärke von 0.5 mm und einen Zelldurchmesser von 8mm. Die Behälter werden nun einzeln abgefüllt und mittels Deckel hermetisch verschlossen, danach werden Sie während 18 h bei 70°C gelagert. Während dieser Zeit geliert die Mischung und die in den Wabenkanälen ausgebildeten Gelkörper altern, wobei diese leicht schrumpfen. Bedingt durch den Schrumpf entstehen Zwischenräume, in welchen die Flüssigkeit zirkulieren kann (analog zu Fig. 2c). Nach erfolgter Alterung werden die Behälter geöffnet und die Synereseflüssigkeit entleert. Danach gibt man pro Behälter 20 l verdünnter Mineralsäure als Katalysator zu, wobei diese sich in den Zwischenräumen zwischen Gel und Wabenwand gleichmässig verteilt. Die Behälter werden erneut verschlossen und während 8h bei 90°C gelagert, wobei die Gele hydrophobiert werden. Anschliessend werden die Behälter entleert und die hydrophobierten Gelstangen in einem Ofen bei 150°C getrocknet. Während der Trocknung zerbrechen die Gelstangen von selbst in ein Aerogelgranulat mit einer Korngrösse zwischen 4 und 7 mm. Die Dichte des so erhaltenen Aerogelgranulats beträgt 0.096 g/cm³ und die Wärmeleitfähigkeit der Schüttung 17.8 mW/m K. Durch die erfindungsgemässe Verarbeitung bleiben die Gelkörper bis zum Trocknungsschritt in der Form unverändert was zu einer Ausbeute an Granulat von mindestens 95% führt. Im Vergleich zu mechanisch zerkleinerten Gelen entsteht so deutlich weniger Aerogelstaub, welcher als minderwertiges Produkt angesehen werden muss.

In einer alternativen Ausführung werden die Einsätze in einem grosstechnischen Prozess nicht in einzelne Behälter sondern in einen länglichen Prozesstunnel eng anschliessend eingesetzt und durchlaufen so mit dem Gel den gesamten Produktionsprozess auf einem Förderbandantrieb, wobei die Synereseflüssigkeit in einem bestimmten Bereich am Boden abgezogen und kurz danach der Hydrophobierungskatalysator von der Decke durch ein Einspritzsystem zudosiert wird.

### Herstellung einer strukturierten Polyurethan Aerogelplatte

Zwei frisch präparierte Lösungen in einem organischen Lösemittelgemisch bestehend aus einem Isocyanatgemisch (Komponente A) und einem Polyol mit einem Katalysator (Komponente B) werden miteinander vermischt und in eine Schalenform gegeben, in welcher eine gleichmässige, flächendeckende Anordnung zylindrischer Stangen gemäss Fig. 3a) eingelassen ist. Die einzelnen Stangen weisen einen Durchmesser d_{S} = 20 mm, eine Länge Ls = 331 mm und einem kürzesten Mittelpunktsabstand as = 35 mm auf. Die Füllhöhe des Solgemischs bestehend aus Komponenten A und B beträgt H = 315 mm. Auf der Oberseite wird das Sol mit einer in die Stangen greifenden, passenden Lochplatte abgedeckt. Nach erfolgter Gelierung und Alterung des Gels wird die Lochplatte entfernt und die einzelnen Stangen herausgezogen. Der Gelkörper wird darauf aus der Form entfernt und in einen Autoklaven transferiert. Die im Gelkörper enthaltene Porenflüssigkeit wird nun in diesem Autoklaven mittels überkritischem CO₂ extrahiert und das Gel anschliessend superkritisch getrocknet. Am Ende bleibt eine Polyurethanaerogel-Lochplatte von 273 mm Dicke zurück.

In einer alternativen Ausführung bestehen die Mischungen A und B aus einer Lösung aus Resorcynol mit geringem Zusatz an Säurekatalysator sowie einer verdünnten, wässrigen Formaldehydlösung.

### Industrielle Herstellung einer Dämmstoffplatte

Ein in einem kontinuierlichen Durchlaufreaktor hergestelltes Siliziumoxid Sol wird auf einen Silikatgehalt von 5.7% (gemessen als SiO₂) eingestellt. Das Sol wird mit Ammoniak als Gelierungskatalysator versehen und in eine Schalenform gegeben, in welcher sich ein nagelbrettartiger Einsatz befindet. Der Einsatz besteht aus einer Grundplatte auf welcher eine regelmässige hexagonale Anordnung von normal zur Fläche stehender nadelartigen Stangen analog Figur 1e mit einem Durchmesser ds = 1.5 mm und einer Länge Ls = 70 mm sowie einem kürzesten Mittelpunktsabstand as = 10 mm, welcher der Seitenlänge des Hexagons entspricht, aufgebracht sind. Die Füllhöhe H des Solgemischs beträgt ebenfalls 70 mm sodass die Spitzen der Stangen knapp bedeckt sind. Nun wird das Sol mit einer zweiten Platte abgedeckt (Abdeckplatte, nicht dargestellt). Nach erfolgter Gelierung und Alterung des Gels wird die Abdeckplatte entfernt, die Gelplatte aus der Form entfernt und der Einsatz vorsichtig herausgelöst. Die mit Durchgangslöchern versehene Gelplatte wird auf ein langsam laufendes (7.3 m/h) Förderband transferiert. Dieser Gelkörper wird von oben mit einem Gemisch aus frischem Hydrophobierungsmittelgemisch bestehend aus 85% HMDSO und 15% salzsaurem verdünntem Ethanol besprüht, wobei die sich auf der Platte aufbauende Überschussflüssigkeit fortwährend über das gas- und flüssigkeitsdurchlässige Förderband-Membranmaterial mittels Pumpe bei geringem Unterdruck abgesaugt wird. Nach 6 h Austausch- und Hydrophobierungszeit bei 75°C wird die Platte mittels Lösemitteltrocknung bei 150°C getrocknet.

### Vergleichsbeispiel

Gemäss einem heute üblichen Standardverfahren ohne kanalbildende Elemente beträgt die unter ansonsten gleichen Bedingungen zu erwartende Austauschund Hydrophobierungszeit rund 25-mal länger, d.h. 150 h, was für einen industriellen Prozess untragbar ist.

In einer weiteren Ausführung wird die im obigen Beispiel beschriebene, nach erfindungsgemässen Verfahren produzierte Dämmstoffplatte mit in die Löcher passenden Aerogelzylindern ausgefüllt. Die dazu benötigten Gelzylinder wurden zuvor eigens aus einer passend gewählten Polyurethangelformulierung zubereitet und anschliessend aus CO₂ überkritisch getrocknet.

## Patentansprüche

1. Verfahren zur Herstellung eines Aerogelmaterials mit einer Porosität von mindestens 0.55 und einer mittleren Porengrösse von 10 nm bis 500 nm, umfassend folgende Schritte:
a) Präparation und gegebenenfalls Aktivierung eines Sol ;
b) Einfüllen des Sols in eine Gussform (10);
c) Gelierung des Sols, wobei ein Gel (4) entsteht, und anschliessende Alterung des Gels;
d) gegebenenfalls Austausch von Porenflüssigkeit durch ein Lösemittel;
e) gegebenenfalls chemische Modifizierung des gealterten und gegebenenfalls lösemittelgetauschten Gels (6) durch ein Reaktionsmittel;
f) Trocknung des Gels, wobei das Aerogelmaterial gebildet wird;
**dadurch gekennzeichnet, dass** die im Schritt b) verwendete Gussform mit einer Vielzahl von kanalbildenden Elementen (2; 14) versehen ist, welche derart gestaltet sind, dass das in die Gussform eingefüllte Sol über eine vorgegebene, in Kanalrichtung der Elemente definierte Mindestlänge L überall maximal um einen Abstand X von einem kanalbildenden Element entfernt ist, mit der Massgabe, dass X = 15 mm und L/X > 3.

2. Verfahren nach Anspruch 1, wobei die kanalbildenden Elemente als Bündel parallel zueinander angeordneter Rohre ausgestaltet ist, wobei die Gussform für das Sol durch die Innenräume der Rohre gebildet wird, und wobei der Lösemittelaustausch d) und/oder die chemische Modifizierung des Gels e) durch einen infolge Schrumpfung während der Alterung des Gels c) ausgebildeten Zwischenraum zwischen Gel und kanalbildendem Element direkt in der Gussform, vorzugsweise durch erzwungene Konvektion von zugeführtem Lösemittel beziehungsweise Reaktionsmittel ausgeführt wird.

3. Verfahren nach Anspruch 2, wobei sämtliche Rohre einen identischen, vorzugsweise sechseckförmigen Querschnitt aufweisen.

4. Verfahren nach Anspruch 2 oder 3, wobei das gegebenenfalls lösemittelgetauschte und gegebenenfalls chemisch modifizierte Gel als Gelstangen aus der Gussform entfernt und danach die Trocknung f) mittels unterkritischer Trocknung ausgeführt wird.

5. Verfahren nach Anspruch 1, wobei die kanalbildenden Elemente als Bündel parallel zueinander angeordneter Stangenelemente ausgestaltet sind, wobei die Gussform für das Sol durch einen sich zwischen den Stangenelementen befindlichen Raum gebildet wird, und wobei die Stangenelemente nach erfolgter Gelierung und Alterung in Kanalrichtung aus der Gussform herausziehbar sind derart, dass ein plattenförmiger Gelkörper mit durchgehenden Kanälen entsteht, wobei der Lösemittelaustausch d) und/oder die chemische Modifizierung des Gels e) durch Beaufschlagen mit Lösemittel beziehungsweise Reaktionsmittel ausgeführt wird.

6. Verfahren nach Anspruch 5, wobei das Beaufschlagen mit Lösemittel beziehungsweise Reaktionsmittel durch erzwungene Konvektion erfolgt, indem der Gelkörper auf eine mindestens teilweise permeablen Saugplatte gestellt wird, an deren Unterseite ein Unterdruck zum Abziehen des Lösemittels beziehungsweise Reaktionsmittels angelegt wird und wobei von oberhalb des Gelkörpers neues Lösemittel beziehungsweise Reaktionsmittel zugeführt wird.

7. Verfahren nach einem der Ansprüche 1 bis 6, wobei
- als Sol ein Siliziumoxid-Sol in einem alkoholischen Lösemittelgemisch präpariert wird, welches mindestens ein säurekatalytisch aktivierbares Hydrophobierungsmittel enthält, wobei der Volumenanteil des Hydrophobierungsmittels im Sol 5 bis 60% beträgt,
- die Gelierung des Sols durch Basenzugabe ausgelöst wird;
- die chemische Modifizierung des gealterten Gels eine Hydrophobierung ist, welche durch Freisetzung oder Zugabe mindestens eines mit dem Hydrophobierungsmittel zusammenwirkenden Hydrophobierungskatalysators eingeleitet wird; und
- die Trocknung des Gels durch durch unterkritisches Trocknen ausgeführt wird;

8. Verfahren nach Anspruch 7, wobei das katalytisch aktivierbare Hydrophobierungsmittel Hexamethyldisiloxan (HMDSO) ist.

9. Verfahren nach Anspruch 7 oder 8, wobei der Volumenanteil des Hydrophobierungsmittels im Sol 20 bis 50%, insbesondere 25% bis 40% und besonders 34% bis 38% beträgt.

10. Verfahren nach einem der Ansprüche 7 bis 9, wobei der Hydrophobierungskatalysator Trimethylchlorsilan (TMCS) und/oder HCl in alkoholischer Lösung ist.

11. Verfahren nach einem der Ansprüche 1 bis 6, wobei das Gel ein polymerbasiertes Gel, vorzugsweise ein polyisocyanat-basiertes Gel ist.

12. Verfahren nach Anspruch 1 bis 11, wobei das gegebenenfalls aktivierte Sol vor der Gelierung in eine faserbasierte Matrix zugegeben wird.

13. Erstes Vorstufenprodukt zur Herstellung einer Dämmstoffplatte, bestehend aus einer gemäss Anspruch 5 herstellbaren, mit Langlöchern versehenen Aerogelplatte.

14. Zweites Vorstufenprodukt zur Herstellung einer Dämmstoffplatte, bestehend aus einer Vielzahl von gemäss Anspruch 2 herstellbaren Aerogelstangen.

15. Dämmstoffplatte bestehend aus einem ersten Vorstufenprodukt gemäss Anspruch 13, in dessen Langlöcher entsprechend geformte Aerogelstangen eines zweiten Vorstufenproduktes nach Anspruch 14 eingesetzt sind.
